# EUROPEAN PATENT APPLICATION

(11) **EP 4 845 168 A1**
(43) Date of publication of application: **25.11.2026**
(21) Application number: 25742107.3
(22) Date of filing: 02.01.2025
(51) Int. Cl.: H04N 23/54, H04N 23/57, G03B 17/02

(54) **CAMERA DEVICE AND OPTICAL APPARATUS**

(30) Priority: 16.01.2024 KR 20240007028; 21.11.2024 KR 20240166923
(71) Applicant: LG Innotek Co., Ltd., Seoul 07796 (KR)
(72) Inventor: HAN, Seung Hyun, Seoul 07796 (KR); SON, Byung Wook, Seoul 07796 (KR); LEE, Sang Youl, Seoul 07796 (KR)
(74) Representative: DREISS Patentanwälte PartG mbB
(86) International application number: PCT/KR2025/000068
(87) International publication number: WO 2025/155008

(57) **Abstract**

The present embodiment relates to a camera device comprising: a base; a holder arranged on the base; a driving unit for moving the holder in the optical axis direction with respect to the base; and balls disposed between the base and the holder, wherein the base includes a groove-shaped rail extending in the optical axis direction, the balls include a first ball and a second ball disposed on the rail of the base, and the base includes a first protrusion protruding from the rail of the base, and the first protrusion of the base is disposed between the first ball and the second ball in the optical axis direction, and the length of the first protrusion in a direction perpendicular to the optical axis is greater than the radius of the second ball.

## Description

### [Technical Field]

The present embodiment relates to a camera device and an optical apparatus.

### [Background Art]

Recent smartphones are equipped with camera functions capable of capturing high-resolution photos and videos.

In particular, an auto-focus function that automatically adjusts the focus according to the distance of a subject is being applied to recent smartphone cameras. The auto-focus function may be performed as a lens moves in the optical axis direction with respect to an image sensor. Accordingly, a lens driving device may be provided with balls for guiding the movement of a moving part where the lens is disposed. At this time, in order to secure a gap between driving balls that are actually driven, space balls (spacing balls) having a smaller diameter than the driving balls may be disposed between the driving balls. However, in this case, the number of parts increases, and there is a risk of slip occurring between the balls, as well as a risk of locking occurring because the balls cannot rotate and get stuck, which causes problems. In particular, the problem becomes greater because many space balls are required when designing an actuator with a high height.

(Patent Literature 1) KR 10-2020-0116402 A

### [Detailed Description of the Invention]

### [Technical Subject]

The present embodiment aims to provide a camera device in which the risks of slip and locking between balls are eliminated.

In addition, the present embodiment aims to provide a camera device in which the number of parts is reduced by omitting space balls.

### [Technical Solution]

The camera device according to the present embodiment comprises: a base; a holder arranged on the base; a driving unit for moving the holder in the optical axis direction with respect to the base; and balls disposed between the base and the holder, wherein the base comprises a groove-shaped rail extending in the optical axis direction, the balls comprise a first ball and a second ball disposed on the rail of the base, the base comprises a first protrusion protruding from the rail of the base, the first protrusion of the base is disposed between the first ball and the second ball in the optical axis direction, and the length of the first protrusion in a direction perpendicular to the optical axis may be greater than the radius of the second ball.

The holder comprises a groove-shaped rail extending in the optical axis direction and a second protrusion protruding from the rail of the holder, and the second protrusion of the holder may be disposed between the first ball and the first protrusion of the base in the optical axis direction.

When the holder moves to the maximum extent in the upper direction of the optical axis, the first protrusion of the base and the second protrusion of the holder may be spaced apart from each other.

The base comprises a third protrusion, and the first ball may be disposed between the third protrusion of the base and the second protrusion of the holder in the optical axis direction.

The holder comprises a fourth protrusion, and the second ball may be disposed between the first protrusion of the base and the fourth protrusion of the holder in the optical axis direction.

When the holder is moved by the driving unit, the balls may roll along the rail of the base.

The second protrusion of the holder may overlap the first protrusion of the base in the optical axis direction.

The length of the first protrusion of the base in the optical axis direction may be greater than the diameter of the second ball.

The length of the second protrusion of the holder in the optical axis direction may be greater than the diameter of the first ball.

The diameter of the first ball and the diameter of the second ball may be the same.

The driving unit comprises a magnet disposed on the holder and a coil interacting with the magnet, the rail of the holder comprises a first rail disposed on one side of the magnet and a second rail disposed on the other side of the magnet, the first ball and the second ball are disposed on the first rail, and the balls may comprise a third ball and a fourth ball disposed on the second rail.

The base comprises a fifth protrusion disposed between the third ball and the fourth ball in the optical axis direction, and the length of the fifth protrusion of the base in the optical axis direction may be shorter than the length of the first protrusion of the base.

The rail of the base comprises an upper rail disposed above the first protrusion and a lower rail disposed below the first protrusion, and the length of the upper rail in the optical axis direction may be different from the length of the lower rail in the optical axis direction.

The camera device may comprise a printed circuit board, an image sensor disposed on the printed circuit board, and a lens coupled to the holder.

The camera device according to the present embodiment comprises: a base; a holder arranged on the base; a driving unit for moving the holder with respect to the base; and balls disposed between the base and the holder, wherein the base comprises a groove-shaped rail, the balls comprise a first ball and a second ball disposed on the rail of the base, the base comprises a first protrusion protruding from the rail of the base, the first protrusion of the base is disposed between the first ball and the second ball, the holder comprises a groove-shaped rail on which the first ball and the second ball are disposed, and a second protrusion protruding from the rail of the holder, and the second protrusion of the holder may be disposed between the first ball and the second ball.

The optical apparatus according to the present embodiment may comprise a body, the camera device disposed on the body, and a display disposed on the body and outputting at least one of an image and a video captured by the camera device.

### [Advantageous Effects]

Through the present embodiment, the risks of slip and locking between the balls can be eliminated. Accordingly, driving stability during auto-focus operation can be improved.

In addition, since the number of parts is reduced by omitting space balls, assembly becomes easier, and manufacturing costs can be reduced.

### [Brief Description of Drawings]

FIG. 1 is a perspective view of the lens driving device according to the present embodiment.
FIG. 2 is a cross-sectional view taken along line A-A of FIG. 1.
FIG. 3 is a cross-sectional view taken along line B-B of FIG. 1.
FIG. 4a (a) is a cross-sectional view illustrating an arrangement structure of balls and related components in a state where the holder has moved to the lowermost end in the optical axis direction, and FIG. 4a (b) is a cross-sectional view illustrating an arrangement structure of balls and related components in a state where the holder has moved to the uppermost end in the optical axis direction.
FIG. 4b is a cross-sectional view for explaining the arrangement structure of balls and rails of the lens driving device according to the present embodiment.
FIG. 5 is a cross-sectional view illustrating an arrangement structure of balls and related components of the lens driving device according to the present embodiment.
FIG. 6 is an exploded perspective view of the lens driving device according to the present embodiment.
FIG. 7 is an exploded perspective view of the lens driving device viewed from a different direction than that of FIG. 6.
FIG. 8 is a perspective view of the lens driving device according to the present embodiment with the cover omitted.
FIG. 9 is a perspective view illustrating the fixed part and related components of the lens driving device according to the present embodiment.
FIG. 10 is a perspective view illustrating the moving part and related components of the lens driving device according to the present embodiment.
FIG. 11 is a perspective view illustrating the fixed part and related components of the lens driving device according to a modified embodiment.
FIG. 12 is a perspective view illustrating the moving part and related components of the lens driving device according to a modified embodiment.
FIG. 13 is a cross-sectional view illustrating an arrangement structure of balls and related components of the lens driving device according to a modified embodiment.
FIG. 14 is a diagram for explaining the auto-focus driving of the lens driving device according to the present embodiment.
FIG. 15 is an exploded perspective view of the camera device according to the present embodiment.
FIG. 16 is a perspective view of the optical apparatus according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' to each other with another component interposed therebetween.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

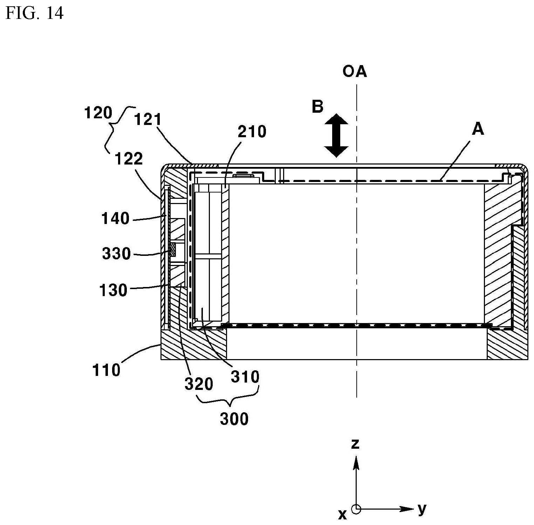

The 'optical axis direction (see **OA** in FIG. 14)' used hereinafter is defined as the direction of the optical axis of a lens and/or an image sensor coupled to the lens driving device.

The 'vertical direction' used hereinafter may be a direction parallel to or the same as the optical axis direction. The vertical direction may correspond to the 'z-axis direction'. The 'horizontal direction' used hereinafter may be a direction perpendicular to the vertical direction. That is, the horizontal direction may be a direction perpendicular to the optical axis. Accordingly, the horizontal direction may comprise the 'x-axis direction' and the 'y-axis direction'.

The 'auto-focus (AF) function' used hereinafter is defined as a function that automatically focuses on a subject by moving the lens in the optical axis direction according to the distance to the subject to adjust the distance from the image sensor so that a clear image of the subject can be obtained on the image sensor. In addition, 'closed-loop auto focus (CLAF) control' is defined as controlling the position of the lens in real-time by sensing the distance between the image sensor and the lens to improve the accuracy of focus adjustment.

Hereinafter, any one of the "x-axis direction", the "y-axis direction", and the "optical axis direction" may be referred to as a "first direction", another as a "second direction", and the other as a "third direction".

Hereinafter, the configuration of the lens driving device according to the present embodiment will be described with reference to the drawings.

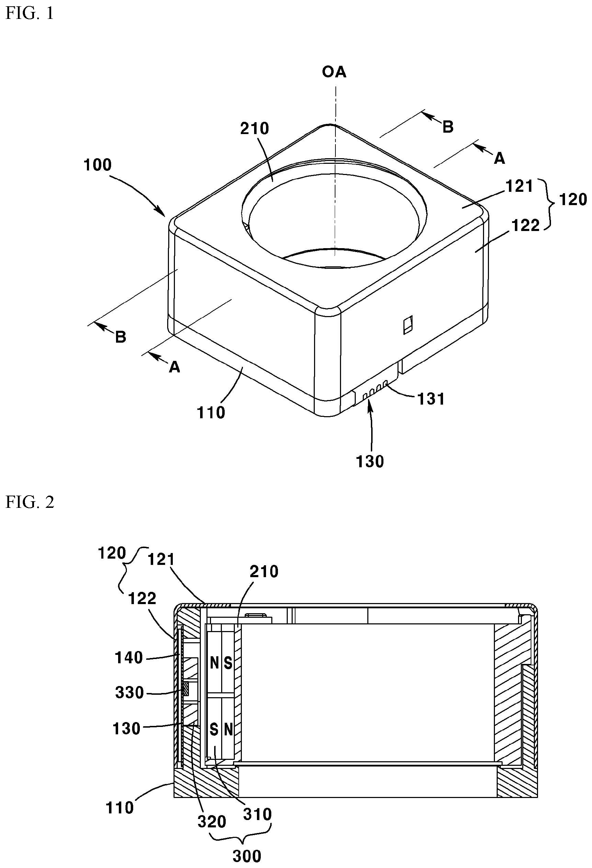

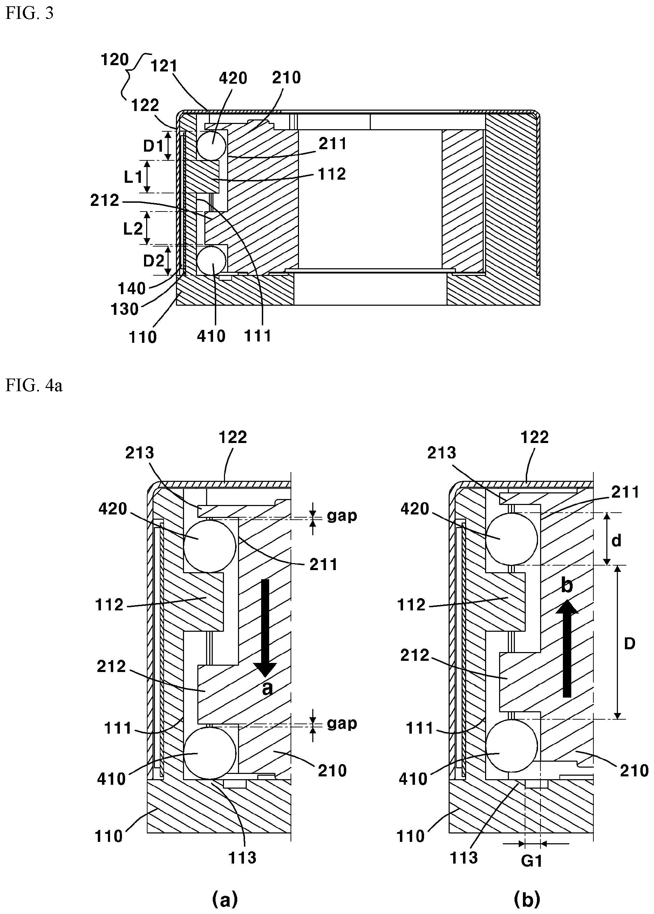

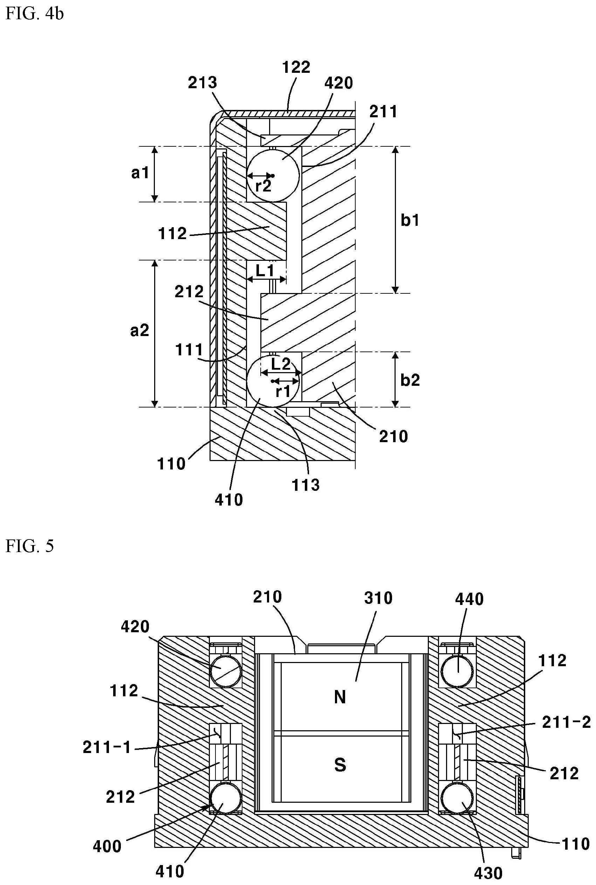

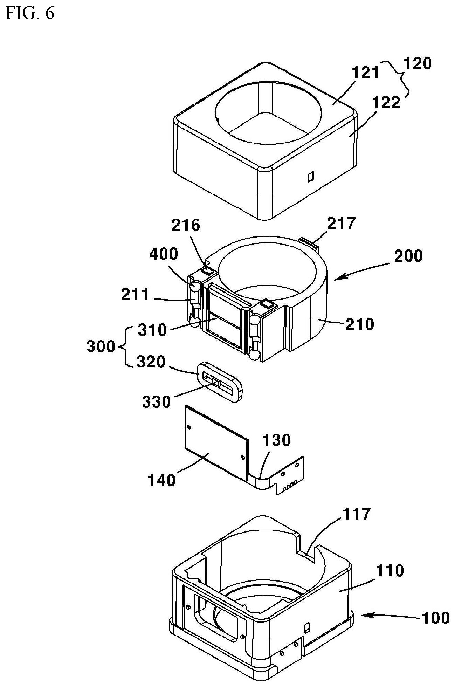

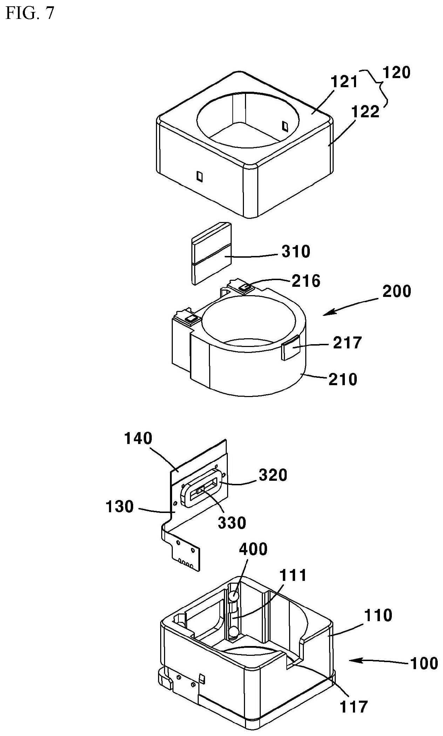

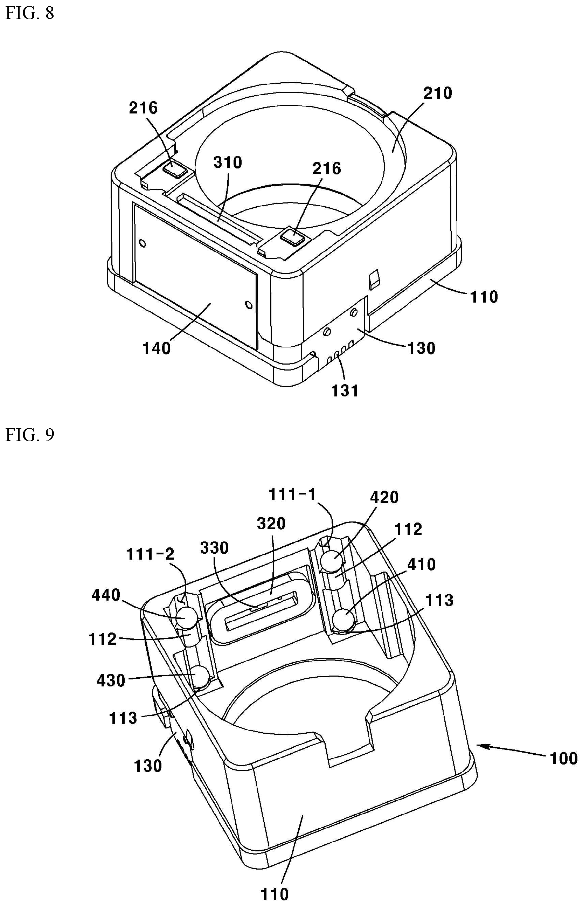

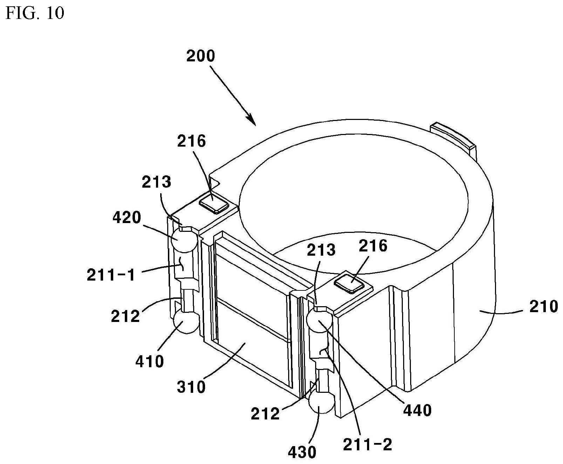

FIG. 1 is a perspective view of the lens driving device according to the present embodiment. FIG. 2 is a cross-sectional view taken along line A-A of FIG. 1. FIG. 3 is a cross-sectional view taken along line B-B of FIG. 1. FIG. 4a (a) is a cross-sectional view illustrating an arrangement structure of balls and related components in a state where the holder has moved to the lowermost end in the optical axis direction, and FIG. 4a (b) is a cross-sectional view illustrating an arrangement structure of balls and related components in a state where the holder has moved to the uppermost end in the optical axis direction. FIG. 4b is a cross-sectional view for explaining the arrangement structure of balls and rails of the lens driving device according to the present embodiment. FIG. 5 is a cross-sectional view illustrating an arrangement structure of balls and related components of the lens driving device according to the present embodiment. FIG. 6 is an exploded perspective view of the lens driving device according to the present embodiment. FIG. 7 is an exploded perspective view of the lens driving device viewed from a different direction than that of FIG. 6. FIG. 8 is a perspective view of the lens driving device according to the present embodiment with the cover omitted. FIG. 9 is a perspective view illustrating the fixed part and related components of the lens driving device according to the present embodiment. FIG. 10 is a perspective view illustrating the moving part and related components of the lens driving device according to the present embodiment.

The lens driving device **10** may comprise a fixed part **100**. The fixed part **100** may be a fixed member. The fixed part **100** may be a portion that is relatively fixed when the moving part **200** moves. The fixed part **100** may be a portion fixed during auto-focus driving. The fixed part **100** may correspond to the image sensor **60** side, and the moving part **200** may correspond to the lens side.

The lens driving device **10** may comprise a base **110**. The fixed part **100** may comprise the base **110**. The base **110** may be a housing. The base **110** may accommodate the holder **210** therein. The base **110** may be disposed outside the holder **210**. The base **110** may be disposed below the holder **210**. The base **110** may be coupled with a cover **120**. The base **110** may be disposed within the cover **120**. The base **110** may be disposed under the cover **120**.

The base **110** may comprise a stepped portion. The stepped portion may be formed at a lower end portion of an outer surface of the base **110**. The stepped portion may be formed by a protrusion of the lower end portion of the outer surface of the base **110**. A side plate **122** of the cover **120** may be disposed on the stepped portion.

The base **110** may comprise a rail **111**. The rail **111** may be a ball rail. A ball **400** may be disposed on the rail **111**. The rail **111** may be disposed in the optical axis direction. The rail **111** may extend in the optical axis direction. The ball **400** may be in contact with the rail **111**. The ball **400** may move along the rail **111**. The rail **111** may be formed in a groove shape. The rail **111** may be a groove.

The rail **111** may comprise a plurality of rails. The rail **111** may comprise a first rail **111-1** and a second rail **111-2**. The rail **111** may comprise a first rail **111-1** corresponding to a first rail **211-1** of the holder **210**, and a second rail **111-2** corresponding to a second rail **211-2** of the holder **210**. A first ball **410** and a second ball **420** may be disposed on the first rail **111-1**. A third ball **430** and a fourth ball **440** may be disposed on the second rail **111-2**.

The first rail **111-1** may be a two-point contact rail. The first rail **111-1** may contact the ball **400** at two points. The ball **400** may be in contact with two inclined surfaces of the first rail **111-1**.

The second rail **111-2** may be a one-point contact rail. The second rail **111-2** may contact the ball **400** at one point. The ball **400** may be in contact with the bottom surface of the second rail **111-2**. The distance between two inclined surfaces of the second rail **111-2** may be longer than the distance between two inclined surfaces of the first rail **111-1**.

In consideration of assembly tolerances, at least one rail among the two rails **211-1** and **211-2** on the holder **210** side and the two rails **111-1** and **111-2** on the base **110** side may be formed in the form of a one-point contact groove. In the present embodiment, as shown in FIG. 9, the second rail **111-2** of the base **110** is a one-point contact groove, but in a modified embodiment, any one of the two rails **211-1** and **211-2** of the holder **210** may be a one-point contact rail.

The base **110** may comprise a first protrusion **112**. The first protrusion **112** may be formed to protrude from the rail **111**. The first protrusion **112** may be a guide part. The inner surface of the first protrusion **112** may be formed as a curved surface. The first protrusion **112** may be formed in a shape different from that of the second protrusion **212**. The first protrusion **112** may support the second ball **420** from the lower side. The first protrusion **112** may support the fourth ball **440** from the lower side. The first protrusion **112** may be formed in a shape that does not interfere with the rail **211** of the holder **210**.

The first protrusion **112** may be formed to protrude from the first rail **111-1**. The first protrusion **112** may be disposed between the first ball **410** and the second ball **420**. The first protrusion **112** may be disposed between the first ball **410** and the second ball **420** in the optical axis direction. The first protrusion **112** may be disposed between the second ball **420** and the second protrusion **212** of the holder **210**. The first protrusion **112** may be disposed between the second ball **420** and the second protrusion **212** of the holder **210** in the optical axis direction.

The first protrusion **112** may be formed to protrude from the second rail **111-2**. The first protrusion **112** may be disposed between the third ball **430** and the fourth ball **440**. The first protrusion **112** may be disposed between the third ball **430** and the fourth ball **440** in the optical axis direction. The first protrusion **112** may be disposed between the fourth ball **440** and the second protrusion **212** of the holder **210**. The first protrusion **112** may be disposed between the fourth ball **440** and the second protrusion **212** of the holder **210** in the optical axis direction.

The length of the first protrusion **112** of the base **110** in the optical axis direction may be greater than the diameter of the first ball **410**. The length of the first protrusion **112** of the base **110** in the optical axis direction (see **L1** in FIG. 3) may be greater than the diameter of the second ball **420** (see **D1** in FIG. 3). According to a modified embodiment, the length of the first protrusion **112** of the base **110** in the optical axis direction may be equal to the diameter of the first ball **410**. According to another modified embodiment, the length of the first protrusion **112** of the base **110** in the optical axis direction may be less than the diameter of the first ball **410**.

The base **110** may comprise a third protrusion **113**. The third protrusion **113** may support the lower end of the ball **400**.

The third protrusion **113** may be formed at the lower end of the first rail **111-1**. The third protrusion **113** may support the first ball **410**. The third protrusion **113** may support the first ball **410** from below. The first ball **410** may be disposed between the third protrusion **113** of the base **110** and the second protrusion **212** of the holder **210** in the optical axis direction.

The third protrusion **113** may be formed at the lower end of the second rail **111-2**. The third protrusion **113** may support the third ball **430**. The third protrusion **113** may support the third ball **430** from below. The third ball **430** may be disposed between the third protrusion **113** of the base **110** and the second protrusion **212** of the holder **210** in the optical axis direction.

The base **110** may comprise a groove **117**. The groove **117** may be formed by depressing the upper surface of the base **110**. The groove **117** may be formed in a side wall of the base **110**. A stopper **217** of the holder **210** may be disposed in the groove **117**. The groove **117** may be formed such that the stopper **217** of the holder **210** is caught by the groove **117** when the holder **210** moves downward or rotates.

The lens driving device **10** may comprise a cover **120**. The fixed part **100** may comprise the cover **120**. The cover **120** may be a cover member. The cover **120** may be a cover can. The cover **120** may be disposed on the base **110**. The cover **120** may be disposed on the base **110**. The cover **120** may be fixed to the base **110**. The cover **120** may be coupled to the base **110**. The cover **120** may be adhered to the base **110** with an adhesive. The cover **120** may accommodate at least a portion of the base **110** therein. The cover **120** may be a shield can. The cover **120** may be formed of metal.

The cover **120** may comprise an upper plate **121**. The upper plate **121** may comprise a hole through which light passes. The upper plate **121** may comprise a hole formed at a position corresponding to the lens. The cover **120** may comprise a side plate **122**. The side plate **122** may extend from the upper plate **121**. The side plate **122** may extend downward from an outer edge of the upper plate **121**. The side plate **122** may be formed in a shape bent from the upper plate **121**.

The side plate **122** of the cover **120** may comprise a plurality of side plates. The side plate **122** may comprise a first side plate and a second side plate disposed opposite to each other, and a third side plate and a fourth side plate disposed opposite to each other.

The lens driving device **10** may comprise a substrate **130**. The fixed part **100** may comprise the substrate **130**. The substrate **130** may be disposed on the base **110**. The substrate **130** may be disposed on the base **110**. The substrate **130** may be fixed to the base **110**. The substrate **130** may be coupled to the base **110**. The substrate **130** may be adhered to the base **110**. The substrate **130** may be disposed on the side plate **122** of the cover **120**. The substrate **130** may be disposed on the side plate **122** of the cover **120**. The substrate **130** may be fixed to the side plate **122** of the cover **120**. The substrate **130** may be coupled to the side plate **122** of the cover **120**. The substrate **130** may be adhered to the side plate **122** of the cover **120**. The substrate **130** may be a flexible printed circuit board (FPCB). The substrate **130** may supply power to a coil **320**. The substrate **130** may supply power to a sensor **330**. The substrate **130** may be disposed parallel to the optical axis.

The substrate **130** may comprise a terminal **131**. The terminal may be disposed on an outer surface of the substrate **130**. The terminal **131** may be formed at the lower end of the substrate **130**. The terminal **131** may comprise a plurality of terminals. The terminal **131** may be coupled to a terminal of a printed circuit board **50**. The terminal **131** may comprise a terminal electrically connected to the sensor **330**. The terminal **131** may comprise a terminal electrically connected to the coil **320**. The terminal **131** may comprise four terminals. The substrate **130** may comprise a bent portion. The substrate **130** may comprise a body portion where the coil **320** and the sensor **330** are disposed, and a bent portion bent and extending from the body portion. The terminal **131** may be disposed at the lower end of the outer surface of the bent portion.

The lens driving device **10** may comprise a ball pressing member. The ball pressing member may press the ball **400** so that the contact state of the ball is maintained. The ball pressing member may comprise a magnet **310** and a yoke **140** between which an attractive force acts.

The lens driving device **10** may comprise a yoke **140**. The ball pressing member may comprise the yoke **140**. The fixed part **100** may comprise the yoke **140**. The yoke **140** may be disposed on the base **110**. The yoke **140** may be disposed on the base **110**. The yoke **140** may be fixed to the base **110**. The yoke **140** may be coupled to the base **110**. The yoke **140** may be disposed on the substrate **130**. The yoke **140** may be disposed on the substrate **130**. The yoke **140** may be fixed to the substrate **130**. The yoke **140** may be coupled to the substrate **130**. The yoke **140** may be disposed on the side plate **122** of the cover **120**. The yoke **140** may be disposed on the side plate **122** of the cover **120**. The yoke **140** may be fixed to the side plate **122** of the cover **120**. The yoke **140** may be coupled to the side plate **122** of the cover **120**.

An attractive force may act between the yoke 140 and the magnet 310. A force to move toward the yoke **140** may act on the magnet **310**. Due to the attractive force between the magnet **310** and the yoke **140**, the holder **210** can press the ball **400** toward the base **110**.

The lens driving device **10** may comprise a moving part **200**. The moving part **200** may be a moving member. The moving part **200** may be a portion that moves relative to the fixed part **100**. The moving part **200** may be moved by a driving unit **300**. The moving part **200** may be disposed to be movable relative to the fixed part **100**. The moving part **200** may move relative to the fixed part **100** during auto-focus driving.

The lens driving device **10** may comprise a holder **210**. The moving part **200** may comprise the holder **210**. The holder **210** may be a lens holder. The holder **210** may be a carrier. The holder **210** may be disposed on the base **110**. The holder **210** may be disposed on the base **110**. The holder **210** may be disposed within the base **110**. The holder **210** may be disposed movably on the base **110**. The holder **210** may move relative to the base **110**. The holder **210** may move in the optical axis direction. The holder **210** may be coupled to the lens. The holder **210** may move integrally with the lens.

The holder **210** may comprise a first side surface. A magnet **310** may be disposed on the first side surface. A ball **400** may be disposed on the first side surface.

The holder **210** may comprise a groove. The groove may be a magnet receiving groove. The groove may be formed by depressing the first side surface of the holder **210**. A magnet **310** may be disposed in the groove. At least a portion of the magnet **310** may be accommodated in the groove.

The holder **210** may comprise a rail **211**. The rail **211** may be a ball rail. The rail **211** may be formed by depressing the first side surface of the holder **210**. The rail **211** may be disposed in the optical axis direction. The rail **211** may extend in the optical axis direction. A ball **400** may be disposed on the rail **211**. At least a portion of the ball **400** may be accommodated in the rail **211**. The ball **400** may move along the rail **211**. The rail **211** may be formed in a groove shape. The rail **211** may be a groove.

The rail **211** may comprise a plurality of rails. The rail **211** may comprise a first rail **211-1** and a second rail **211-2**. The rail **211** may comprise a first rail **211-1** disposed on one side of the magnet **310**, and a second rail **211-2** disposed on the other side of the magnet **310**. A first ball **410** and a second ball **420** may be disposed on the first rail **211-1**. A third ball **430** and a fourth ball **440** may be disposed on the second rail **211-2**.

The holder **210** may comprise a second protrusion **212**. The second protrusion **212** may be formed to protrude from the rail **211** of the holder **210**. The second protrusion **212** may be a guide part. The second protrusion **212** may be formed in a shape that does not interfere with the rail **111** of the base **110**. The second protrusion **212** may comprise a triangular cross-sectional shape. The second protrusion **212** may support the first ball **410** from the upper side. The second protrusion **212** may support the third ball **430** from the upper side.

The second protrusion **212** may be formed to protrude from the first rail **211-1** of the holder **210**. The second protrusion **212** may be disposed between the first ball **410** and the first protrusion **112** of the base **110**. The second protrusion **212** may be disposed between the first ball **410** and the first protrusion **112** of the base **110** in the optical axis direction. The second protrusion **212** may be disposed between the first ball **410** and the second ball **420**. The second protrusion **212** may be disposed between the first ball **410** and the second ball **420** in the optical axis direction.

The second protrusion **212** may be formed to protrude from the second rail **211-2** of the holder **210**. The second protrusion **212** may be disposed between the third ball **430** and the first protrusion **112** of the base **110**. The second protrusion **212** may be disposed between the third ball **430** and the first protrusion **112** of the base **110** in the optical axis direction. The second protrusion **212** may be disposed between the third ball **430** and the fourth ball **440**. The second protrusion **212** may be disposed between the third ball **430** and the fourth ball **440** in the optical axis direction.

The second protrusion **212** of the holder **210** may overlap with the first protrusion **112** of the base **110** in the optical axis direction. In the optical axis direction, the first ball **410**, the second protrusion **212** of the holder **210**, the first protrusion **112** of the base **110**, and the second ball **420** may be overlapped in this order. The first protrusion **112** of the base **110** may be disposed on an imaginary line connecting the first ball **410** and the second ball **420**. The second protrusion **212** of the holder **210** may be disposed on an imaginary line connecting the first ball **410** and the second ball **420**.

When the holder **210** moves to the maximum extent in the upper direction of the optical axis, the first protrusion **112** of the base **110** and the second protrusion **212** of the holder **210** may be spaced apart from each other. As shown in (b) of FIG. 4a, in a state where the holder **210** is in contact with the upper plate **121** of the cover **120**, a gap may be formed between the first protrusion **112** of the base **110** and the second protrusion **212** of the holder **210**.

The second protrusion **212**, which is the guide shape of the moving part **200**, and the first protrusion **112**, which is the guide shape of the fixed part **100**, may be designed with a margin so that they do not come into contact under any circumstances. However, if the length of the guide part shape of the moving part **200** and the fixed part **100** in the optical axis direction becomes too small, the injection moldability may deteriorate, and there is a possibility that the guide part shape may be damaged by contact with the ball **400**.

The length of the second protrusion **212** of the holder **210** in the optical axis direction (see **L2** in FIG. 3) may be greater than the diameter of the first ball **410** (see **D2** in FIG. 3). The length of the second protrusion **212** of the holder **210** in the optical axis direction may be greater than the diameter of the second ball **420**. According to a modified embodiment, the length of the second protrusion **212** of the holder **210** in the optical axis direction may be equal to the diameter of the first ball **410**. The length of the second protrusion **212** of the holder **210** in the optical axis direction may be less than the diameter of the first ball **410**.

The holder **210** may comprise a fourth protrusion **213**. The fourth protrusion **213** may support the upper end of the ball **400**. The fourth protrusion **213** may prevent the ball **400** from being detached upward.

The fourth protrusion **213** may be formed at the upper end of the first rail **211-1**. The fourth protrusion **213** may cover the second ball **420**. The fourth protrusion **213** may be disposed above the second ball **420**. The fourth protrusion **213** may prevent the second ball **420** from being detached upward. The second ball **420** may be disposed between the first protrusion **112** of the base **110** and the fourth protrusion **213** of the holder **210** in the optical axis direction.

The fourth protrusion **213** may be formed at the upper end of the second rail **211-2**. The fourth protrusion **213** may cover the fourth ball **440**. The fourth protrusion **213** may be disposed above the fourth ball **440**. The fourth protrusion **213** may prevent the fourth ball **440** from being detached upward. The fourth ball **440** may be disposed between the first protrusion **112** of the base **110** and the fourth protrusion **213** of the holder **210** in the optical axis direction.

The holder **210** may comprise an upper stopper **216**. The upper stopper **216** may be formed on the upper surface of the holder **210**. The upper stopper **216** may form the upper end of the holder **210**. The upper stopper **216** may come into contact with the upper plate **121** of the cover **120** when the holder **210** moves upward. That is, the upward movement of the holder **210** may be restricted by the upper stopper **216**. The upper stopper **216** may comprise a protrusion.

The holder **210** may comprise a stopper **217**. The stopper **217** may be formed as a protrusion or a projection. The stopper **217** may be formed to protrude from the outer surface of the holder **210**. The stopper **217** may be disposed in the groove **117** of the base **110**. The stopper **217** may be formed in a shape corresponding to the groove **117** of the base **110**.

The stopper **217** may come into contact with the upper plate **121** of the cover **120** when the holder **210** moves upward. The stopper **217** may come into contact with the base **110** when the holder **210** moves downward. The stopper **217** may come into contact with the base **110** when the holder **210** rotates. That is, the stopper **217** may perform the function of any one or more of an upper stopper, a lower stopper, and a rotation stopper.

The lens driving device **10** may comprise a driving unit **300**. The driving unit **300** may move the moving part **200** relative to the fixed part **100**. The driving unit **300** may move the moving part **200** when power is applied. The driving unit **300** may comprise a magnet **310** and a coil **320**. The driving unit **300** may move the moving part **200** through electromagnetic interaction. The magnet **310** and the coil **320** can move the holder **210** relative to the base **110**. The magnet **310** and the coil **320** can move the holder **210** in the optical axis direction. The driving unit **300** can move the holder **210** relative to the base **110** in the optical axis direction.

The lens driving device **10** may comprise a magnet **310**. The driving unit **300** may comprise the magnet **310**. The magnet **310** may be disposed on the holder **210**. The magnet **310** may be disposed on the holder **210**. The magnet **310** may be fixed to the holder **210**. The magnet **310** may be coupled to the holder **210**. The magnet **310** may be adhered to the holder **210** with an adhesive.

The magnet **310** may be disposed at a position corresponding to the coil **320**. The magnet **310** may overlap with the coil **320** in a direction perpendicular to the optical axis. The magnet **310** may overlap with the coil **320** in the x-axis direction. Alternatively, the magnet **310** may overlap with the coil **320** in the y-axis direction. The magnet **310** may be disposed to face the coil **320**. The magnet **310** may oppose the coil **320**. The magnet **310** may interact with the coil **320**. The magnet **310** may electromagnetically interact with the coil **320**. The magnet **310** may move when a current is applied to the coil **320**. The magnet **310** may move integrally with the holder **210**.

The magnet **310** may be a 4-pole magnetized magnet. The magnet **310** may comprise a first magnet part comprising an N-pole and an S-pole, a second magnet part disposed on the first magnet part and comprising an S-pole and an N-pole, and a neutral part disposed between the first magnet part and the second magnet part. The magnet **310** may be disposed in the optical axis direction.

According to a modified embodiment, the magnet **310** may be a 2-pole magnetized magnet. For example, the upper region of the magnet **310** may be an N-pole and the lower region may be an S-pole.

The magnet 310 may be disposed such that an attractive force acts between the magnet 310 and the yoke 140. The ball **400** may be pressed between the holder **210** and the base **110** by the force of the magnet **310** tending to move toward the yoke **140**. Through this, the state in which the ball **400** is in close contact with the holder **210** and the base **110** can be maintained.

The lens driving device **10** may comprise a coil **320**. The driving unit **300** may comprise the coil **320**. The coil **320** may be disposed on the substrate **130**. The coil **320** may be disposed on the substrate **130**. The coil **320** may be fixed to the substrate **130**. The coil **320** may be coupled to the substrate **130**. The coil **320** may be soldered to the substrate **130**. The coil **320** may be disposed on the base **110**. The coil **320** may be disposed on the base **110**. The coil **320** may be fixed to the base **110**. The coil **320** may be disposed on the side plate **122** of the cover **120**. The coil **320** may be disposed on the side plate **122** of the cover **120**.

The coil **320** may interact with the magnet **310**. The coil **320** may be disposed to face the magnet **310**. The coil **320** may oppose the magnet **310**. The coil **320** may be disposed at a position corresponding to the magnet **310**. The coil **320** may overlap with the magnet **310** in a direction perpendicular to the optical axis. The coil **320** may overlap with the magnet **310** in the x-axis direction. Alternatively, the coil **320** may overlap with the magnet **310** in the y-axis direction. The coil **320** may move the magnet **310**. The coil **320** may move the holder **210**. The coil **320** may move the lens.

When a current is applied to the coil **320**, the magnet **310** may move. When a forward current is applied to the coil **320**, the magnet **310** may move upward. When a reverse current is applied to the coil **320**, the magnet **310** may move downward. However, conversely, when a reverse current is applied to the coil **320**, the magnet **310** may move upward, and when a forward current is applied to the coil **320**, the magnet **310** may move downward.

The lens driving device **10** may comprise a sensor **330**. The driving unit **300** may comprise the sensor **330**. The sensor **330** may be disposed on the substrate **130**. The sensor **330** may be disposed on the substrate **130**. The sensor **330** may be coupled to the substrate **130**. The sensor **330** may be soldered to the substrate **130**. The sensor **330** may be mounted on the substrate **130**.

The sensor **330** may detect the magnet **310**. The sensor **330** may detect the magnetic force of the magnet **310**. The sensor **330** may be a Hall sensor. The sensor **330** may detect the position or movement of the magnet **310**. Through this, the sensor **330** may detect the position or movement of the holder **210**. The sensor **330** may detect the holder **210**. The position of the magnet **310** detected by the sensor **330** can be used for auto-focus feedback control.

The lens driving device **10** may comprise a guide part. The guide part may guide the movement of the moving part **200** relative to the fixed part **100**. The guide part may guide the movement of the moving part **200** in the optical axis direction.

The lens driving device **10** may comprise a ball **400**. The guide part may comprise the ball **400**. The ball **400** may be formed of ceramic. The ball **400** may be a ceramic ball. The ball **400** may be formed in a spherical shape. The ball **400** may comprise a curved surface.

The ball **400** may be disposed on the base **110**. The ball **400** may be disposed on the base **110**. The ball **400** may come into contact with the base **110**. The ball **400** may be disposed on the rail **111** of the base **110**. The ball **400** may be disposed on the rail **111** of the base **110**. The ball **400** may come into contact with the rail **111** of the base **110**.

The ball **400** may be disposed on the holder **210**. The ball **400** may be disposed on the holder **210**. The ball **400** may come into contact with the holder **210**. The ball **400** may be disposed on the rail **211** of the holder **210**. The ball **400** may be disposed on the rail **211** of the holder **210**. The ball **400** may come into contact with the rail **211** of the holder **210**.

The ball **400** may be disposed between the base **110** and the holder **210**. The ball **400** may be disposed between the rail **111** of the base **110** and the rail **211** of the holder **210**. The ball **400** may be disposed between the base **110** and the holder **210** in a first direction perpendicular to the optical axis direction. The ball **400** may be disposed between the holder **210** and the base **110** in a direction in which the magnet **310** faces the yoke **140**.

The ball **400** may roll in the optical axis direction. The ball **400** may move together with the holder **210** when the holder **210** moves. The ball **400** may limit the movement of the holder **210** to movement in the optical axis direction. The movement of the holder **210** in directions other than the optical axis direction may be restricted by the ball **400**. The ball **400** may guide the movement of the holder **210** in the optical axis direction.

When the holder **210** is moved by the driving unit **300**, the ball **400** may roll along the rail **111** of the base **110**. In the present embodiment, when the holder **210** moves, the ball **400** can move without rotating in place. A rotational friction force generated when rotating in place and a rolling friction force generated when rolling can act on the ball **400**, but in the present embodiment, the rolling friction force can be used instead of the rotational friction force. The rolling friction force may be smaller than the rotational friction force. Therefore, in the present embodiment, the power consumed for driving can be reduced.

The present embodiment may comprise a structure in which, when the moving part **200** moves upward (see **b** of (b) of FIG. 4a), a movement space for the ball **400** is opened, so that the ball **400** does not interfere with the moving part **200** or the fixed part **100**. Therefore, in the present embodiment, it may be possible for the ball **400** to roll along the rails **111**, **211** rather than rotating in place. When the moving part **200** moves upward, the rolling friction of the ball **400** can be used.

Furthermore, when the moving part **200** moves downward (see **a** of (a) of FIG. 4a), the rolling friction of the ball **400** can also be used.

As shown in (b) of FIG. 4a, the minimum separation distance (see **D** in FIG. 4a) between the two balls **410**, **420** in the optical axis direction can be maintained. Even when the holder **210** moves, the distance between the first ball **410** and the second ball **420** can be maintained.

In the present embodiment, a leaning phenomenon of the ball **400** can be prevented compared to a comparative example in which the second protrusion **212** of the moving part **200** and the first protrusion **112** of the fixed part **100** are not present. In the comparative example, when the leaning phenomenon of the ball **400** occurs, tilt may occur during movement of the moving part **200**, which may cause problems.

The ball **400** may comprise a plurality of balls. The ball **400** may comprise four balls. The ball **400** may comprise first to fourth balls **410**, **420**, **430**, **440**. The ball **400** may comprise a first ball **410** and a second ball **420** disposed on the first rail **111-1** of the base **110**. The ball **400** may comprise a first ball **410** and a second ball **420** disposed on the first rail **211-1** of the holder **210**. The ball **400** may comprise a third ball **430** and a fourth ball **440** disposed on the second rail **111-2** of the base **110**. The ball **400** may comprise a third ball **430** and a fourth ball **440** disposed on the second rail **211-2** of the holder **210**.

The first ball **410** and the second ball **420** may overlap in the optical axis direction. The second ball **420** may be disposed on the first ball **410**. The third ball **430** and the fourth ball **440** may overlap in the optical axis direction. The fourth ball **440** may be disposed on the third ball **430**. The first ball **410** and the third ball **430** may overlap in a direction perpendicular to the optical axis. The second ball **420** and the fourth ball **440** may overlap in a direction perpendicular to the optical axis.

The diameter of the first ball **410** and the diameter of the second ball **420** may be the same. The diameter of the first ball **410** and the diameter of the third ball **430** may be the same. The diameter of the third ball **430** and the diameter of the fourth ball **440** may be the same. The diameter of the second ball **420** and the diameter of the fourth ball **440** may be the same. The diameter of the first ball **410** and the diameter of the fourth ball **440** may be the same.

In the present embodiment, the device can be designed such that the moving part **200** and the ball **400** do not come into contact even when the moving part **200** moves to the lowest side. Even when the moving part **200** moves to the lowest side, the moving part **200** and the ball **400** may not come into contact. Through this, the risk of locking of the ball **400** can be eliminated. As shown in (a) of FIG. 4a, even when the moving part **200** moves to the lowest side, a gap may exist between the moving part **200** and the ball **400**. A gap may exist between the moving part **200** and the first ball **410** and between the moving part **200** and the second ball **420**.

In the present embodiment, the device can be designed such that the ball **400** does not fall downward even when the moving part **200** moves to the lowest side. As shown in (b) of FIG. 4a, the gap between the third protrusion **113** of the base **110** and the holder **210** may be smaller than the radius of the ball **400**. The gap between the third protrusion **113** of the base **110** and the holder **210** may be smaller than the diameter of the ball **400**.

In the present embodiment, the device can be designed such that the ball **400** does not fall upward even when the moving part **200** moves to the highest side. As shown in (b) of FIG. 4a, the gap between the base **110** and the fourth protrusion **213** of the holder **210** may be smaller than the radius of the ball **400**. The gap between the base **110** and the fourth protrusion **213** of the holder **210** may be smaller than the diameter of the ball **400**.

When the moving part **200** moves, the ball **400** can move by an amount of movement that is half of the amount of movement of the moving part **200**. Therefore, the length of the rails **111**, **211** (see **L** in (b) of FIG. 4a) can be secured by at least the sum of the "diameter of the ball **400** (see **d** in (b) of FIG. 4a)" and "half of the stroke length of the moving part **200**". That is, the length of the rails **111**, **211** may be greater than the sum of the diameter of the ball **400** and half of the stroke length of the moving part.

The length of the first protrusion **112** of the base **110** in a direction perpendicular to the optical axis (see **L1** in FIG. 4b) may be greater than the radius of the individual balls **410**, **420**. The length of the first protrusion **112** of the base **110** in a direction perpendicular to the optical axis (see **L1** in FIG. 4b) may be greater than the radius of the first ball **410** (see **r1** in FIG. 4b). The length of the first protrusion **112** of the base **110** in a direction perpendicular to the optical axis (see **L1** in FIG. 4b) may be greater than the radius of the second ball **420** (see **r2** in FIG. 4b).

If the protruding length of the first protrusion **112** is smaller than the radius of the second ball **420**, the second ball **420** may be caught between the first protrusion **112** and the holder **210**, which causes problems.

The length of the second protrusion **212** of the holder **210** in a direction perpendicular to the optical axis (see **L2** in FIG. 4b) may be greater than the radius of the individual balls **410**, **420**. The length of the second protrusion **212** of the holder **210** in a direction perpendicular to the optical axis (see **L2** in FIG. 4b) may be greater than the radius of the first ball **410** (see **r1** in FIG. 4b). The length of the second protrusion **212** of the holder **210** in a direction perpendicular to the optical axis (see **L2** in FIG. 4b) may be greater than the radius of the second ball **420** (see **r2** in FIG. 4b).

If the protruding length of the second protrusion **212** is smaller than the radius of the first ball **410**, the first ball **420** may be caught between the second protrusion **212** and the base **110**, which causes problems.

The rail **111** of the base **110** may comprise an upper rail disposed above the first protrusion **112** and a lower rail disposed below the first protrusion **112**. The second ball **420** may be disposed on the upper rail of the base **110**, and the first ball **410** may be disposed on the lower rail of the base **110**. The length of the upper rail of the base **110** in the optical axis direction (see **a1** in FIG. 4b) may be different from the length of the lower rail of the base **110** in the optical axis direction (see **a2** in FIG. 4b). The length of the upper rail of the base **110** in the optical axis direction (see **a1** in FIG. 4b) may be shorter than the length of the lower rail of the base **110** in the optical axis direction (see **a2** in FIG. 4b). According to a modified embodiment, the length of the upper rail of the base **110** in the optical axis direction may be longer than the length of the lower rail of the base **110** in the optical axis direction.

The rail **211** of the holder **210** may comprise an upper rail disposed above the second protrusion **212** and a lower rail disposed below the second protrusion **212**. The second ball **420** may be disposed on the upper rail of the holder **210**, and the first ball **410** may be disposed on the lower rail of the holder **210**. The length of the upper rail of the holder **210** in the optical axis direction (see **b1** in FIG. 4b) may be different from the length of the lower rail of the holder **210** in the optical axis direction (see **b2** in FIG. 4b). The length of the upper rail of the holder **210** in the optical axis direction (see **b1** in FIG. 4b) may be longer than the length of the lower rail of the holder **210** in the optical axis direction (see **b2** in FIG. 4b). According to a modified embodiment, the length of the upper rail of the holder **210** in the optical axis direction may be shorter than the length of the lower rail of the holder **210** in the optical axis direction.

According to a modified embodiment, the fourth protrusion **213** may be formed as a separate member from the holder **210**. The fourth protrusion **213** may be formed as a separate member and coupled to the upper part of the holder **210**. The first protrusion **112** may be formed as a separate member from the base **110**. The first protrusion **112** may be formed as a separate member and coupled to the rail **111** of the base **110**. The second protrusion **212** may be formed as a separate member from the holder **210**. The second protrusion **212** may be formed as a separate member and coupled to the rail **211** of the holder **210**.

Hereinafter, the configuration of the lens driving device according to the modified embodiment will be described with reference to the drawings. Hereinafter, the configuration of the modified embodiment will be described focusing on the differences from the present embodiment. Configurations of the modified embodiment not described below can be inferred and applied from the description in the present embodiment.

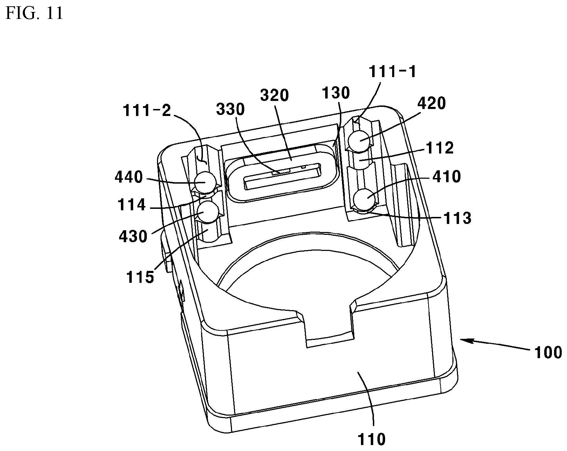

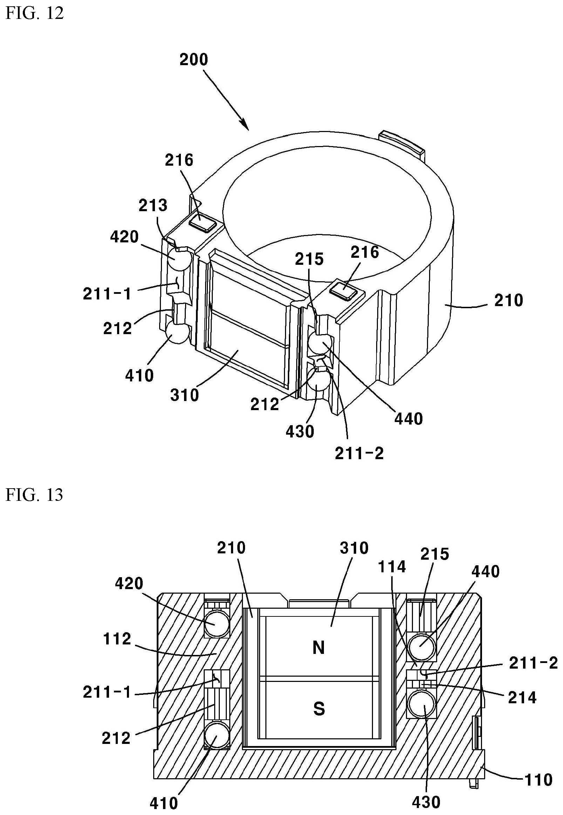

FIG. 11 is a perspective view illustrating the fixed part and related components of the lens driving device according to the modified embodiment. FIG. 12 is a perspective view illustrating the moving part and related components of the lens driving device according to the modified embodiment. FIG. 13 is a cross-sectional view illustrating an arrangement structure of balls and related components of the lens driving device according to the modified embodiment.

In the modified embodiment, the shape of the protrusions formed on the second rails **111-2**, **211-2** may be modified.

The base **110** may comprise a fifth protrusion **114** disposed between the third ball **430** and the fourth ball **440** in the optical axis direction. In the optical axis direction, the length of the fifth protrusion **114** of the base **110** may be shorter than the length of the first protrusion **112** of the base **110**.

The base **110** may comprise a seventh protrusion **115**. The seventh protrusion **115** may support the lower end of the third ball **430**. The bottom surface of the seventh protrusion **115** may be disposed higher than the bottom surface of the third protrusion **113**.

The holder **210** may comprise a sixth protrusion **214** disposed between the third ball **430** and the fourth ball **440** in the optical axis direction. In the optical axis direction, the length of the sixth protrusion **214** of the holder **210** may be shorter than the length of the second protrusion **212** of the holder **210**.

The holder **210** may comprise an eighth protrusion **215**. The eighth protrusion **215** may cover the fourth ball **440** from above. The ceiling surface of the eighth protrusion **215** may be disposed below the ceiling surface of the fourth protrusion **213**.

In the modified embodiment, the first to fourth balls **410**, **420**, **430**, **440** may be arranged asymmetrically. The third ball **430** may be disposed higher than the first ball **410**. The fourth ball **440** may be disposed lower than the second ball **420**. Therefore, the distance between the third ball **430** and the fourth ball **440** may be shorter than the distance between the first ball **410** and the second ball **420**. In a direction perpendicular to the optical axis, the first ball **410** may not overlap with the third ball **430**. In a direction perpendicular to the optical axis, the second ball **420** may not overlap with the fourth ball **440**. The second ball **420** may be disposed higher than the first ball **410**, and the fourth ball **440** may be disposed higher than the third ball **430**. The first ball **410** and the second ball **420** may overlap in the optical axis direction, and the third ball **430** and the fourth ball **440** may overlap in the optical axis direction.

Hereinafter, the auto-focus driving of the lens driving device according to the present embodiment will be described with reference to the drawings.

FIG. 14 is a diagram for explaining the auto-focus driving of the lens driving device according to the present embodiment.

When a current is applied to the coil **320**, an electromagnetic field is formed around the coil **320**, and the coil **320** and the magnet **310** can electromagnetically interact. At this time, since the coil **320** is in a state fixed to the substrate **130** and the base **110**, the magnet **310** can move. The magnet **310** can move together with the holder **210** and the lens (see **A** in FIG. 14). At this time, since the ball **400** guides the movement of the holder **210** relative to the base **110** in the optical axis direction, the holder **210** and the lens can move in the optical axis direction (see **OA** in FIG. 14) (see **B** in FIG. 14). Through this, the lens can move in the optical axis direction relative to the image sensor **60**.

More specifically, when a forward current is applied to the coil **320**, the magnet **310** can move upward in the optical axis direction due to the interaction between the coil **320** and the magnet **310**. Through this, the lens can move away from the image sensor **60**. At an initial position where no current is applied to the coil **320**, an upper stroke space can be formed between the upper stopper **216** of the holder **210** and the upper plate **121** of the cover **120**. When a forward current is applied to the coil **320**, the holder **210** can move within the upper stroke space.

In addition, when a reverse current is applied to the coil **320**, the magnet **310** can move downward in the optical axis direction due to the interaction between the coil **320** and the magnet **310**. Through this, the lens can move closer to the image sensor **60**. At an initial position where no current is applied to the coil **320**, a lower stroke space can be formed between the lower stopper of the holder **210** and the base **110**. When a reverse current is applied to the coil **320**, the holder **210** can move within the lower stroke space.

In this way, by applying a forward or reverse current to the coil **320**, the image of the subject formed on the image sensor **60** can be clearly adjusted. That is, auto-focus driving can be performed.

Furthermore, the sensor **330** can detect the magnetic field of the magnet **310** in real-time to detect the position of the magnet **310**, the holder **210**, and the lens. Through the position of the lens detected by the sensor **330**, feedback control for moving the lens to a more accurate position can be performed. In the present embodiment, more precise auto-focus driving can be performed through auto-focus feedback control.

Hereinafter, the configuration of the camera device according to the present embodiment will be described with reference to the drawings.

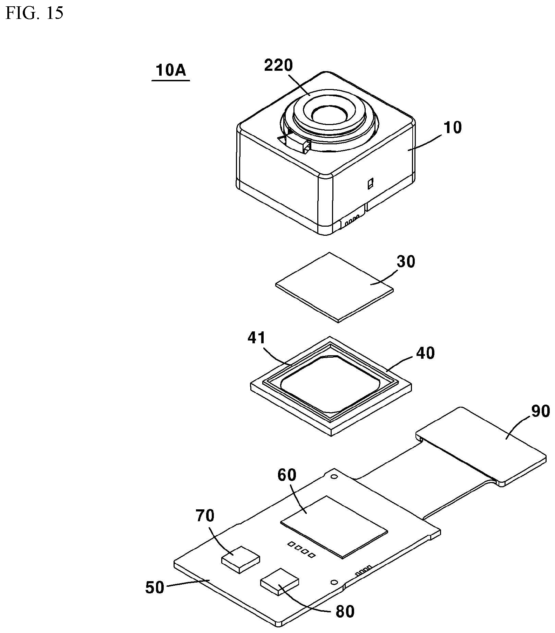

FIG. 15 is an exploded perspective view of the camera device according to the present embodiment.

The camera device **10A** may comprise the lens driving device **10**. The lens driving device **10** may be a voice coil motor (VCM). The lens driving device **10** may be a lens driving motor. The lens driving device **10** may be a lens driving actuator. The lens driving device **10** may comprise an AF module. According to a modified embodiment, the lens driving device **10** may comprise an OIS module. The lens driving device **10** may be a device that drives a lens. As shown in the figure, the lens driving device **10** may comprise a lens. However, the lens can be understood as a configuration of the camera device **10A** that is separate from the lens driving device **10**.

The camera device **10A** may comprise a lens module **20**. The lens module **20** may be disposed on the image sensor **60**. The lens module **20** may be coupled to the lens driving device **10**. The lens module **20** may be coupled to the holder **210** of the lens driving device **10**. The lens module **20** may move integrally with the holder **210**. The lens module **20** may be disposed to be movable relative to the image sensor **60**. The lens module **20** may move in the optical axis direction relative to the image sensor **60**.

The lens module **20** may comprise a lens. The lens may comprise a plurality of lenses. The lens module **20** may comprise a barrel. A plurality of lenses may be disposed within the barrel. The plurality of lenses may be coupled to the inner peripheral surface of the barrel. The plurality of lenses may be stacked and disposed within the barrel.

The camera device **10A** may comprise a filter **30**. The filter **30** can serve to block light of a specific frequency band, among the light passing through the lens module 20, from being incident on the image sensor 60. The filter **30** may be disposed parallel to the x-y plane. The filter **30** may be disposed between the lens module **20** and the image sensor **60**. The filter **30** may be disposed on a sensor base **40**. According to a modified embodiment, the filter **30** may be disposed on the base **110** of the lens driving device **10**. The filter **30** may comprise an infrared filter. The infrared filter can block light in the infrared region from being incident on the image sensor **60**.

The camera device **10A** may comprise a sensor base **40**. The sensor base **40** may be disposed between the lens driving device **10** and a printed circuit board **50**. The sensor base **40** may comprise a protrusion **41** on which the filter **30** is disposed inside. An opening may be formed in the portion of the sensor base **40** where the filter **30** is disposed so that light passing through the filter **30** can be incident on the image sensor **60**. An adhesive member can couple or attach the base **110** of the lens driving device **10** to the sensor base **40**. The adhesive member can further serve to prevent foreign substances from entering the inside of the lens driving device **10**. The adhesive member may comprise one or more of epoxy, thermosetting adhesive, and ultraviolet curable adhesive.

The camera device **10A** may comprise a printed circuit board (PCB) **50**. The printed circuit board **50** may be a substrate or a circuit board. The lens driving device **10** may be disposed on the printed circuit board **50**. A sensor base **40** may be disposed between the printed circuit board **50** and the lens driving device **10**. The printed circuit board **50** may be electrically connected to the lens driving device **10**. An image sensor **60** may be disposed on the printed circuit board **50**. Various circuits, elements, control units, and the like, may be provided on the printed circuit board **50** to convert an image formed on the image sensor **60** into an electrical signal and transmit it to an external device.

The camera device **10A** may comprise an image sensor **60**. The image sensor **60** may be a configuration in which light passing through the lens and the filter **30** is incident to form an image. The image sensor **60** may be mounted on the printed circuit board **50**. The image sensor **60** may be electrically connected to the printed circuit board **50**. For example, the image sensor **60** may be coupled to the printed circuit board **50** by Surface Mounting Technology (SMT). As another example, the image sensor **60** may be coupled to the printed circuit board **50** by flip chip technology. The image sensor **60** may be disposed such that the optical axis of the lens and the optical axis of the image sensor **60** coincide. That is, the optical axis of the image sensor **60** and the optical axis of the lens can be aligned. The image sensor **60** can convert light irradiated onto the effective image area of the image sensor **60** into an electrical signal. The image sensor **60** may be any one of a charge coupled device (CCD), a metal oxide semi-conductor (MOS), a CPD, and a CID.

The camera device **10A** may comprise a motion sensor **70**. The motion sensor **70** may be mounted on the printed circuit board **50**. The motion sensor **70** may be electrically connected to a control unit **80** through a circuit pattern provided on the printed circuit board **50**. The motion sensor **70** can output rotational angular velocity information due to the movement of the camera device **10A**. The motion sensor **70** may comprise a 2-axis or 3-axis gyro sensor or an angular velocity sensor.

The camera device **10A** may comprise a control unit **80**. The control unit **80** may be disposed on the printed circuit board **50**. The control unit **80** may be electrically connected to the coil **320** of the lens driving device **10**. The control unit **80** can individually control the direction, intensity, amplitude, and the like, of the current supplied to the coil **320**. The control unit **80** can control the lens driving device **10** to perform an auto-focus function and/or an image stabilization function. Furthermore, the control unit **80** can perform auto-focus feedback control and/or image stabilization feedback control for the lens driving device **10**.

The camera device **10A** may comprise a connector **90**. The connector **90** may be electrically connected to the printed circuit board **50**. The connector **90** may comprise a port for electrical connection with an external device.

Hereinafter, the configuration of the optical apparatus according to the present embodiment will be described with reference to the drawings.

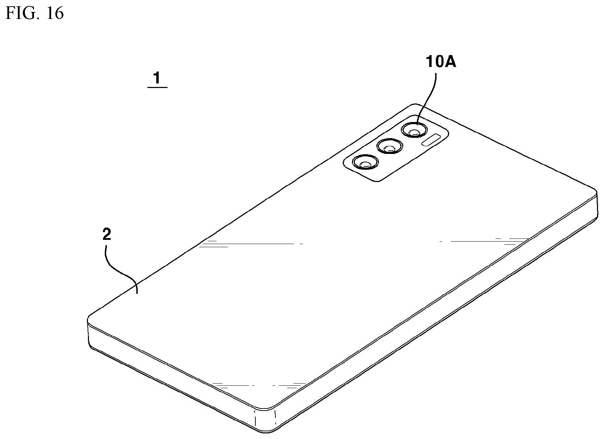

FIG. 16 is a perspective view of the optical apparatus according to the present embodiment.

The optical apparatus **1** may comprise one or more of a mobile phone, a cellular phone, a portable terminal, a mobile terminal, a smart phone, a smart pad, a portable smart device, a digital camera, a laptop computer, a digital broadcasting terminal, a PDA (Personal Digital Assistants), a PMP (Portable Multimedia Player), and a navigation system. The optical apparatus **1** may comprise any device for shooting images or photos. The optical apparatus **1** may comprise a robot. The optical apparatus **1** may comprise a vehicle.

The optical apparatus **1** may comprise a body **2**. The optical apparatus **1** may comprise a camera device **10A**. The camera device **10A** may be disposed on the body **2**. The camera device **10A** can photograph a subject. The optical apparatus **1** may comprise a display. The display may be disposed on the body **2**. The display can output one or more of video and images captured by the camera device **10A**. The display may be disposed on a first surface of the body **2**. The camera device **10A** may be disposed on one or more of the first surface of the body 2 and a second surface opposite to the first surface. The camera device **10A** may have a triple camera disposed in a vertical direction. Alternatively, the camera device **10A** may have a triple camera disposed in a horizontal direction.

Although the embodiments of the present invention have been described above with reference to the accompanying drawings, those skilled in the art to which the present invention pertains will understand that the present invention can be practiced in other specific forms without changing its technical spirit or essential features. Therefore, it should be understood that the embodiments described above are illustrative in all respects and not restrictive.

## Claims

1. A camera device, comprising:
a base;
a holder disposed on the base;
a driving unit for moving the holder relative to the base in an optical axis direction; and
a ball disposed between the base and the holder,
wherein the base comprises a groove-shaped rail extending in the optical axis direction,
wherein the ball comprises a first ball and a second ball disposed on the rail of the base,
wherein the base comprises a first protrusion protruding from the rail of the base,
wherein the first protrusion of the base is disposed between the first ball and the second ball in the optical axis direction, and
wherein a length of the first protrusion in a direction perpendicular to the optical axis is greater than a radius of the second ball.

2. The camera device of claim 1, wherein the holder comprises a groove-shaped rail extending in the optical axis direction and a second protrusion protruding from the rail of the holder, and
wherein the second protrusion of the holder is disposed between the first ball and the first protrusion of the base in the optical axis direction.

3. The camera device of claim 2, wherein the first protrusion of the base and the second protrusion of the holder are spaced apart from each other when the holder is moved to a maximum extent in an upper direction of the optical axis.

4. The camera device of claim 2, wherein the base comprises a third protrusion, and
wherein the first ball is disposed between the third protrusion of the base and the second protrusion of the holder in the optical axis direction.

5. The camera device of claim 1, wherein the holder comprises a fourth protrusion, and
wherein the second ball is disposed between the first protrusion of the base and the fourth protrusion of the holder in the optical axis direction.

6. The camera device of claim 1, wherein the ball rolls along the rail of the base when the holder is moved by the driving unit.

7. The camera device of claim 2, wherein the second protrusion of the holder overlaps with the first protrusion of the base in the optical axis direction.

8. The camera device of claim 1, wherein a length of the first protrusion of the base in the optical axis direction is greater than a diameter of the second ball.

9. The camera device of claim 2, wherein a length of the second protrusion of the holder in the optical axis direction is greater than a diameter of the first ball.

10. The camera device of claim 1, wherein a diameter of the first ball and a diameter of the second ball are the same.
